# EUROPÄISCHE PATENTSCHRIFT

(11) **EP 1 867 466 B1**
(45) Veröffentlichungstag und Bekanntmachung des Hinweises auf die Patenterteilung: **11.03.2009**
(21) Anmeldenummer: 07106766.4
(22) Anmeldetag: 24.04.2007
(51) Int. Cl.: B29D 30/16, B29D 30/30, B60C 9/20

(54) **Verfahren zur Herstellung einer Gürtellage eines Fahrzeugreifens**
Method for manufacturing the belt ply for a vehicle tyre
Procédé de fabrication d'un bandage d'un pneu de véhicule

(30) Priorität: 13.06.2006 DE 102006027316
(43) Veröffentlichungstag der Anmeldung: 19.12.2007
(73) Patentinhaber: Continental Aktiengesellschaft, 30165 Hannover (DE)
(72) Erfinder: Welzhofer, Martin, 30173 Hannover (DE); Winkler, Jens, 30900 Wedemark (DE)

(56) Entgegenhaltungen:
- EP-A- 1 279 485
- EP-A1- 1 041 194
- DE-A1-7102004 029 98
- US-A1- 2005 067 081

## Beschreibung

Die Erfindung betrifft ein Verfahren zur Herstellung einer Gürtellage eines Fahrzeugreifens.

Zur Herstellung von Gürtellagen eines Fahrzeugluftreifens werden üblicherweise parallele Stahlkorde mit Kautschuk beschichtet. Das hierdurch erzeugte Band paralleler in Kautschuk eingebetteter Stahlkorde wird parallel zur Längserstreckung der Stahlkorde auf einen Fördertisch gefördert und entsprechend dem gewünschten Winkel, die die Stahlkorde in der Äquatorebene des fertigen Reifens zur Umfangsrichtung einnehmen sollen, schräg zur Förderrichtung in einzelne Bandabschnitte geschnitten. Danach werden die einzelnen Bandabschnitte mit ihren parallel zur Förderrichtung auf dem Fördertisch ausgerichteten seitlichen Rändern unter Überlappung einiger Stahlkorde mit einander verbunden. Hierdurch entsteht ein Band mit parallel verlaufenden in Kautschuk eingebetteten Stahlkorden, die unter einem Winkel zur Längsachse des neuen Bandes verlaufen, der dem Schnittwinkel entspricht. Dieses Band wird beim Aufbau des Fahrzeugreifens in Umfangsrichtung einer Gürtelaufbautrommel der Gürtelaufbautrommel zugeführt. Die Länge des Bandes entspricht dem Umfang der Gürtelaufbautrommel. Auf diese Weise wird eine erste Gürtellage aufgebaut. Über die erste Gürtellage wird eine zweite in gleicher Weise jedoch mit entgegengesetzt steigendem Winkel der Stahlkorde ausgebildete Gürtellage aufgebaut. Der Schnittwinkel auf dem ersten Fördertisch legt den Winkel aller Stahlkorde über deren ganze Erstreckung auf der Umfangstrommel und im fertigen Reifen fest. Eine individuelle Winkellagenabstimmung des Kordes entsprechend den jeweiligen Anforderungen der einzelnen axialen Reifenabschnitte ist hierdurch nicht möglich.

Es ist auch bekannt, zum Aufbau einer Gürtellage in Umfangsrichtung eines bereits konturierten Reifenrohlings mehrere Streifen von parallelen in Kautschuk eingebetteten Stahlkorden hintereinander jeweils unter einem Schrägwinkel zur Umfangsrichtung aufzulegen und die Streifen nach radial innen der Kontur des Reifenrohlings folgend anzudrücken. Dies ist beispielsweise aus der WO03/045714A8 bekannt. Die Streifen bilden einen relativ festen Verband paralleler Stahlkorde, die beim konturgerechten Andrücken in den Erstreckungsbereichen unterhalb des Reifenäquators zu Verspannungen innerhalb der Streifen und zu in einer Gürtellage unerwünschten Überlappungen zwischen den Streifen führen können. Um die Überlappungen sicher zu verhindern müssen weitere Maßnahmen zur Deformation unter zusätzlicher Verspannungsgefahr vorgenommen werden. Die Verspannungen können Auswirkungen auf Qualität und Sicherheit des Reifens haben. Die Rückstellkräfte stellen ein weiteres Problem dar.

Aus der US2002/0023705A1 ist es bekannt, derartige Streifen S-förmig zu deformieren und so aufzulegen, dass die Streifen und mit ihnen die Stahlkorde im Äquatorbereich den größten Steigungswinkel zur Umfangsrichtung und im Gürtelrandbereich den kleinsten Steigungswinkel zur Umfangsrichtung aufweisen. Auch diese Streifen bilden einen relativ festen Verband paralleler s-förmiger Stahlkorde, die beim konturgerechten Andrücken in den Erstreckungsbereichen unterhalb des Reifenäquators zu Verspannungen innerhalb der Streifen und zu in einer Gürtellage unerwünschten Abständen zwischen den Streifen führen können, die mit zusätzlichen Streifen wieder überdeckt werden. Die beim Verformen der Streifen erzeugten Verspannungen innerhalb der Streifen können Auswirkungen auf Qualität und Sicherheit des Reifens haben. Die Rückstellkräfte stellen auch hier ein weiteres Problem dar.

Aus der DE 10 2004 029 987 A1 ist es bekannt, Gürtelaufbaumaterial aus einem Band von parallelen Korden, das beidseitig mit Kautschukmaterial beschichtet ist, zwischen mehreren von der Oberseite und von der Unterseite auf das Band einwirkenden konturierten Rollen hindurchzuführen und dabei das Band aus der Förderebene heraus um in Förderrichtung gerichtete Achsen zu deformieren. Anschließend werden mit Hilfe von Zugkräften, die auf das Band wirken, die im Band deformierten Korde wieder in eine Ebene gekippt, so dass das Band wiederum in einer flachen Ebene liegt, jedoch mit darin enthaltenen deformierten Korden.

Der Erfindung liegt die Aufgabe zugrunde, in einfacher Weise die Herstellung von Fahrzeugreifen mit wenigstens einer Gürtellage zu ermöglichen, bei der sowohl eine individuelle Einstellung des Verlaufs des Winkels der Festigkeitsträger der Gürtellage als auch eine weitgehend spannungsfreie Auflage der Gürtellage möglich wird.

Die Aufgabe wird erfindungsgemäß durch das Verfahren zur Herstellung einer Gürtellage eines Fahrzeugreifens gemäß den Merkmalen von Anspruch 1 gelöst, bei dem mehrere fadenförmige oder bandförmige Festigkeitsträger zunächst in einer Ebene einzeln parallel und beabstandet zu einander aufgelegt werden, bei dem die Festigkeitsträger danach in ihrem Längenverlauf deformiert werden, bei dem die Festigkeitsträger erst nach der Deformation miteinander verbunden werden und bei dem erst danach die so gebildete Lage aus mit einander verbundenen Festigkeitsträgern der Aufbaueinrichtung zum Aufbau eins Reifengürtels zugeführt wird.

Auf diese Weise werden die Festigkeitsträger in einfacher Weise noch im entkoppelten Zustand zunächst entsprechend dem gewünschten Winkelverlauf deformiert und erst danach gekoppelt. In diesem spannungsfrei gekoppelten Zustand werden sie aufgelegt. Die spannungsfreie Kopplung führt zu einer Minimierung von unerwünschten Rückstellkräften. Auch kleine Losgrößen von Fahrzeugreifen sind individuell in ihrem Winkelverlauf einfach einstellbar.

Besonders vorteilhaft, ist das Verfahren gemäß den Merkmalen von Anspruch 2, bei dem die Festigkeitsträger jeweils nach Auflage in der Ebene zunächst in der Ebene mittels Fixierelementen in ihrer Position fixiert und danach in ihrem Längenverlauf deformiert werden, bei dem die Festigkeitsträger erst nach der Deformation miteinander verbunden werden, bei dem danach die Fixierung gelöst wird und bei dem danach die so gebildete Lage aus mit einander verbundenen Festigkeitsträgern der Aufbaueinrichtung zum Aufbau eins Reifengürtels zugeführt wird. Das Aufbauen ungewünschter innere Spannungen können hierdurch vermieden werden. Das Entstehen eines unerwünschten Materialrückstellmoments kann wird hierdurch weitgehend vermieden werden.

Besonders vorteilhaft ist das Verfahren gemäß den Merkmalen von Anspruch 3, bei dem das Auflegen der band- oder fadenförmigen Festigkeitsträger in der Ebene dadurch erfolgt, dass jeweils ein erster band- oder fadenförmiger Festigkeitsträger längs seiner Erstreckungsrichtung in die Ebene eingeführt wird, bei dem dieser band- oder fadenfömige Festigkeitsträger in der Ebene längs seiner Erstreckungsrichtung an zwei von einander beabstandeten Positionen fixiert und dann abgelängt wird, und dass danach ein weiterer in Querrichtung zur Längserstreckung des abgelängten Festigkeitsträgers beabstandeter band- oder fadenförmiger Festigkeitsträger längs seiner Erstreckungsrichtung in die Ebene eingeführt wird, der ebenfalls in der Ebene längs seiner Erstreckungsrichtung an zwei von einander beabstandeten Positionen fixiert und dann abgelängt wird. In einfacher Weise wird hierdurch eine kontaktfreie Fixierung der benachbarten Festigkeitsträger und somit ein weitgehendes Vermeiden unerwünschter innerer Spannungen bei der späteren Verformung ermöglicht. Zur Verformung sind hierdurch nur noch reduzierte Kräfte erforderlich. Eine genau definierte Verformung wird hierdurch erleichtert.

Besonders vorteilhaft, ist das Verfahren gemäß den Merkmalen von Anspruch 4, bei dem die band- oder fadenförmigen Festigkeitsträger in der Ebene auf wenigstens zwei, insbesondere wenigstens vier, quer zur Längserstreckung der Festigkeitsträger ausgerichtete Halteleisten aufgelegt und auf diesen fixiert werden. Dies ermöglicht eine genaue Führung der Form der Festigkeitsträger. Die Ausbildung mit wenigstens vier Halteleisten ermöglicht zusätzliche fixierte Punkte, die eine besonders hohe Flexibilität der definierten Verformung ermöglicht.

Besonders vorteilhaft, ist das Verfahren gemäß den Merkmalen von Anspruch 5, bei dem die Fixierung über magnetische Haltekräfte erfolgt. Dies ermöglicht in einfache Weise eine zuverlässige einfache Materialhandhabung und eine sehr einfache zuverlässige Ausbildung der Materialbeschickung.

Besonders vorteilhaft, ist das Verfahren gemäß den Merkmalen von Anspruch 6, bei dem die Fixierung über magnetische Halteleisten erfolgt. In einfacher Weise wird hierdurch eine großflächige Fixierung der Festigkeitsträger ermöglicht.

Besonders vorteilhaft, ist das Verfahren gemäß den Merkmalen von Anspruch 7, bei dem die Fixierung über Formschluss erfolgt. Dies ermöglicht in einfacher Weise eine optimiert und sichere Einstellung der Form des Gürtels.

Besonders vorteilhaft, ist das Verfahren gemäß den Merkmalen von Anspruch 8, bei dem die Fixierung über Führungsschienen mit mehreren Durchgangsöffnungen zur Aufnahme jeweils eines einzelnen Festigkeitsträgers und/oder über kammartige Führungsschienen mit mehreren Ausnehmungen zur Aufnahme jeweils eines einzelnen Festigkeitsträgers erfolgt. Dies ermöglicht eine besonders gute und zuverlässige Führung des Festigkeitsträgers. Ein unerwünschtes Abrutschen aus der aufgelegten Position kann in einfacher Weise sicher vermieden werden.

Besonders vorteilhaft, ist das Verfahren gemäß den Merkmalen von Anspruch 9, bei dem die Deformation der einzelnen Festigkeitsträger durch gesteuerte relative Positionsveränderung der auf den jeweiligen Festigkeitsträger einwirkenden Fixierelemente zueinander erfolgt. Hierdurch ist in einfacher Weise individuell einstellbar eine gezielte Verformung des Festigkeitsträgers in die gewünschte Form möglich. Auch minimale Losgrößen können mit geringem Aufwand erstellt werden. So ist beispielsweise auch eine Einzelfertigung eines Gürtels, d.h. eine Losgröße von eins, mit sehr individuellen Anforderungen mit geringem Aufwand einfach erzeugbar.

Die Erfindung wird anhand des in den Figuren 1-6 beispielhaft dargestellten Verfahrens zur Herstellung einer Gürtellage näher erläutert. Hierin zeigen
- Fig. 1: das Einführen und Ablängen eines einzelnen Stahlkordes in eine durch zwei parallele Führungsschienen und durch zwei ebenfalls hierzu parallelen Führungskämmen beschriebenen Ebene, wobei die Vorrichtung mit Führungsschienen und Führungskämmen zur Vereinfachung schematisch in perspektivischer Darstellung gezeigt ist,
- Fig. 2: Erläuterung des parallelen Aufbaus mehrerer paralleler zueinander beabstandeter Stahlkorde, wobei die Vorrichtung von Fig. 1 in Draufsicht dargestellt ist,
- Fig. 3: Darstellung zur Erläuterung der Einstellung des Cordwinkel in der Vorrichtung von Fig. 1,
- Fig. 4: Darstellung zur Erläuterung der gezielten Deformation der Kordwinkel,
- Fig. 5: Darstellung zur Erläuterung der Koppelung der in den in den Figuren 1- 4 aufgelegten, ausgerichteten und deformierten Stahlkorde,
- Fig. 6: Darstellung zur Erläuterung der Entfernung der auf diese Weise hergestellten Lage paralleler, mit gewünschtem Neigungswinkel ausgerichteter, gezielt im Winkel deformierter und miteinander verbundener Stahlkorde.

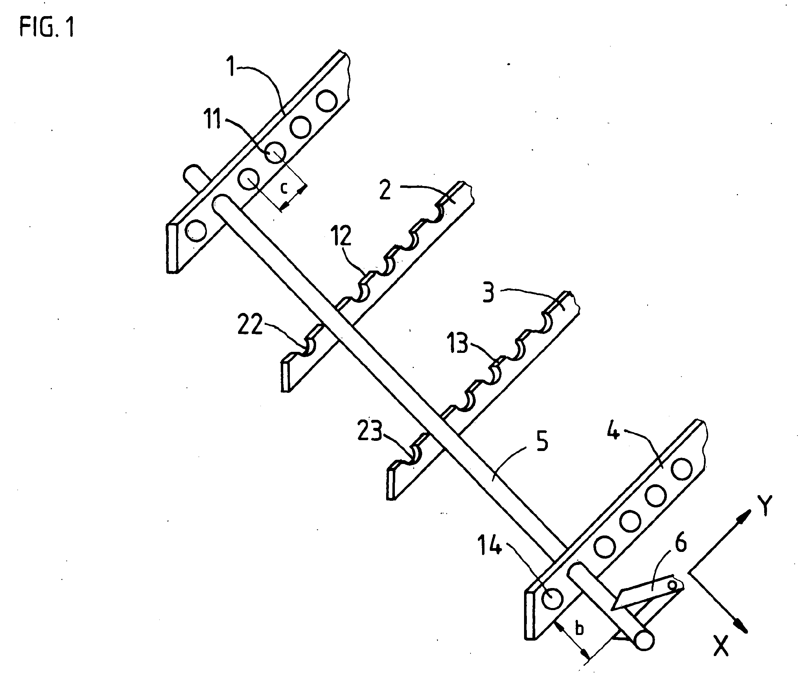

Die Figuren 1-6 zeigen eine Vorrichtung, bei der auf einem zur Vereinfachung nicht dargestellten ebenen Tisch oder einem ebenen Gestell zwei parallel zueinander ausgerichtete und voneinander beabstandete Führungsschienen 1 und 4 und zwischen den beiden Führungsschienen 1 und 4 zwei parallel zu den Führungsschienen 1 und 4 ausgerichtete Führungskämme 2 und 3 jeweils längs ihrer Längserstreckungsrichtung gesteuert verschiebbar gelagert sind. Die Führungsschienen 1 und 4 sind jeweils mit einer Vielzahl von in ihrer Längserstreckungsrichtung äquidistant zueinander angeordneten Durchgangsöffnungen 11 bzw. 14 versehen. Die Führungskämme 2 und 3 sind nach oben hin mit in ihrer Längserstreckungserstreckung äquidistant hintereinander angeordneten Zähnen 12 bzw. 13 und zwischen jeweils zwei hintereinander angeordneten Zähnen 12 bzw. zwischen zwei jeweils hintereinander angeordneten Zähnen 13 jeweils mit einer Zahnlücke 22 bzw. 23 ausgebildet.

In einem dargestellten Ausführungsbeispiel sind die Durchgangsöffnungen 11 und 14 jeweils kreisförmig zylindrisch und die Zahnlücken 22 bzw. 23 halbkreisförmig halbzylindrisch ausgebildet, wobei die Zylinderachsen der Durchgangsöffnungen 11 und 14 sowie der Achsen der Zylinder der Halbzylinder 22 und 23 jeweils parallel zueinander in einer Ebene liegen.

Die Durchmesser der Durchgangsöffnungen 11 und 14 sowie der Zahnlücken 22 bzw. 23 sind so bemessen, dass ein Stahlkord 5 zum Aufbau einer Gürtellage mit geringem Spiel durch die Durchgangsöffnungen 11 bzw. 14 sowie durch die Zahnlücken 22 bzw. 23 senkrecht zur Längserstreckungsrichtung der Führungsschienen 1 bzw. 4 sowie der Führungskämme 2 bzw. 3 eingeschoben werden kann.

Zur Herstellung einer Gürtellage wird - wie in Figur 1 dargestellt ist - ein Stahlkord 5 in einer Vorrichtung mit den beiden Führungsschienen 1 und 4 sowie mit den beiden Führungskämmen 2 und 3 in diese eingeführt. Hierzu werden zunächst die Führungsschienen 1 und 4 sowie die Führungskämme 2 und 3 so in ihrer Längserstreckung aufeinander abgestimmt, dass jeweils eine Durchgangsöffnung 14 der Führungsschiene 4 eine Zahnlücke 23 des Führungskamms 3, eine Zahnlücke 22 des Führungskamm 2 sowie eine Durchgangsöffnung 11 der Führungsschiene 1 mit ihrer Achse in einer senkrecht zur Längserstreckungsrichtung der Führungsschienen 1 und 4 und der Führungskämme 2 und 3 gerichteten Geraden liegen und somit einen gemeinsamen Einführungskanal bilden. Nun wird der Stahlkord 5 mit seinem Anfang zunächst durch die Durchgangsöffnung 14 der Führungsschiene 4, dann durch die korrespondierend ausgebildete Zahnlücke 23 des Führungskamm 2, dann durch die korrespondierend ausgebildete Zahnlücke 22 des Führungskamm 2 und danach soweit durch die korrespondierende Durchgangsöffnung 11 der Führungsschiene 1 geführt eingeschoben, dass sich der Stahlkord 5 über einen gewünschten, vorgegebenen Abstand a auf der linken Seite der Führungsschiene 1 über diese hinaus erstreckt. Danach wird der Stahlkord 5 auf der rechten Seite im gewünschten, vorgegebenen Abstand b rechts von der Führungsschiene 14 in bekannter Weise - beispielsweise mittels bekannter Schneidemesser oder Scheren - abgelängt.

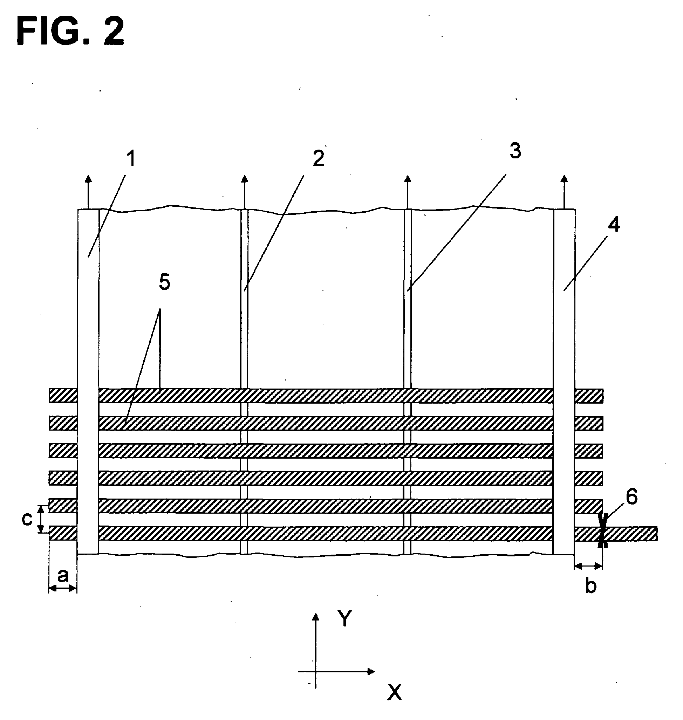

Wie in Fig. 2 dargestellt ist, werden danach die Führungsschiene 1, der Führungskamm 2, der Führungskamm 3 und die Führungsschiene 4 längs der Längserstreckungsrichtung der Führungsschienen 1 und 4 sowie der Führungskämme 2 und 3 in gleiche Richtung um das gleiche Maß c verschoben, das dem Abstand zweier in den Führungsschienen 1 und 4 hintereinander angeordneten Durchgangsöffnungen 11 bzw. 14 sowie dem Abstand jeweils zweier in den Führungskämmen 2 und 3 hintereinander angeordneter Zahnlücken 22 bzw. 23 entspricht.

Danach wird durch den durch die nächste Durchgangsöffnung 14, die nächste Zahnlücke 23, die nächste Zahnlücke 22 und die nächste Durchgangsöffnung 11 gebildeten Einführkanal - wie bereits im Zusammenhang mit Fig. 1 beschrieben - der nächste Stahlkord 5 mit seinem Anfang eingeführt, bis auch dieser wieder bis in den Abstand a auf der linken Seite der Führungsschiene 1 über diese hinausragt. Auch dieser Stahlkord 5 wird im Abstand b zur rechten Seite der Führungsschiene 4 abgelängt.

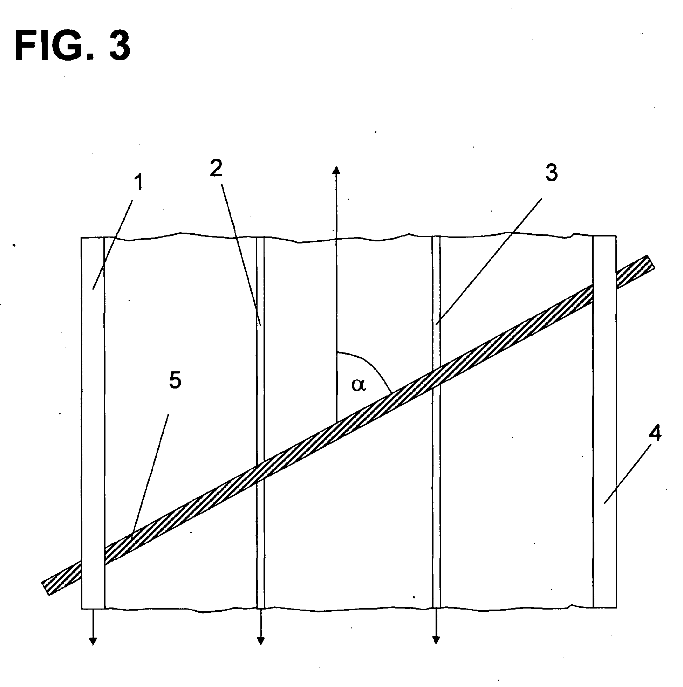

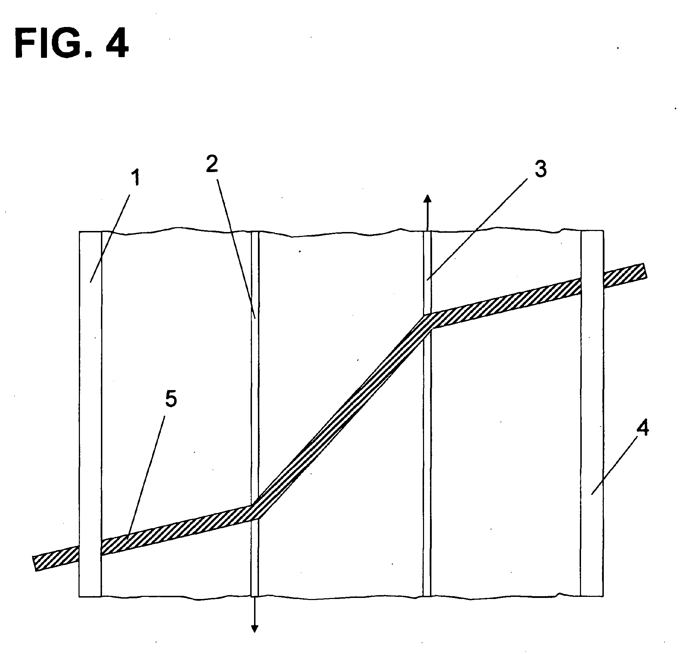

Danach werden wiederum die Führungsschienen 1 und 4 sowie die Führungskämme 2 und 3 um das Maß c längs ihrer Längserstreckungsrichtung weiter verschoben und der nächste Stahlcord 5 wiederum in der gleichen Weise eingelegt. Auf diese Weise werden, wie in Fig. 2 zu erkennen, eine Vielzahl äquidistant zueinander hintereinander angeordneter einzelner Stahlkorde 5 in einer Ebene angeordnet. Sobald die Lage die gewünschte Lagenerstreckung von hintereinander angeordneten Stahlkorden 5 aufweist, wird - wie in Fig. 3 dargestellt ist - der Haupterstreckungswinkel der einzelnen Stahlkorde 5 eingestellt. In Fig. 3, ebenso wie in den Figuren 4 bis 6 ist zur Vereinfachung lediglich ein Stahlkord 5 dargestellt. Allerdings sind - wie in Fig. 2 dargestellt - eine Vielzahl von jeweils äquidistant zueinander hintereinander angeordneter Stahlkorde jeweils geführt durch die Durchgangsöffnungen und die Zahnlücken der Führungsschienen 1 und 4 sowie der Führungskämme 2 und 3.

Wie in Fig. 3 dargestellt ist, werden der Führungskamm 3, der Führungskamm 2 und die Führungsschiene 1 gegenüber der in ihrer Position unveränderten Führungsschiene 4 verschoben, wobei das Maß der Verschiebung ausgehend von rechts nach links zunimmt, so dass das Maß der Verschiebung der Führungsschiene 1 größer ist als das Maß der Verschiebung des Führungskamms 2 und dieses größer ist als das Maß der Verschiebung des Führungskamms 3.

Das Maß der Verschiebung ist dabei so aufeinander abgestimmt, dass die durch die Durchgangsöffnung 11 der Führungsschiene 1, die Zahnlücke 22 des Führungskamms 2, die Zahnlücke 32 des Führungskamms 3 und die Durchgangsöffnung 14 der Führungsschiene 4 gebildete Führungsgerade und somit die Stahlkorde 5 in dem gewünschten Winkel α zur Erstreckungsrichtung der Führungsschienen 1 und 4 und der Führungskämme 2 und 3 liegen.

In einem weiteren in Fig. 4 dargestellten Schritt werden bei unveränderter Lage der Führungsschienen 1 und 4 durch gezielte individuelle Verschiebung der Führungskämme 2 und 3 alle Stahlcorde 5 gezielt deformiert und in einen gewünschten individuellen Neigungswinkelverlauf längs ihrer Erstreckung gebracht. Beispielsweise wird - wie in Fig. 4 dargestellt ist - der Führungskamm 2 in die eine und der Führungskamm 3 in die andere Richtung verschoben. Auf diese Weise erhalten die Stahlkorde 5 in der Position des Führungskamms 2 sowie in der Position des Führungskamms 3 jeweils einen Knick in ihrem Verlauf. Je nach Einstellung des Maßes der Verschiebung des Führungskamms 2 bzw. des Führungskamms 3 kann hierdurch der Verlauf der Stahlkorde 5 mit ihrem Neigungswinkel zwischen Führungsschiene 1 und Führungskamm 2, mit ihrem Neigungswinkel zwischen Führungskamm 2 und Führungskamm 3, sowie mit ihrem Neigungswinkel zwischen Führungskamm 3und Führungsschiene 4 genau entsprechend den individuellen vorgaben eingestellt werden.

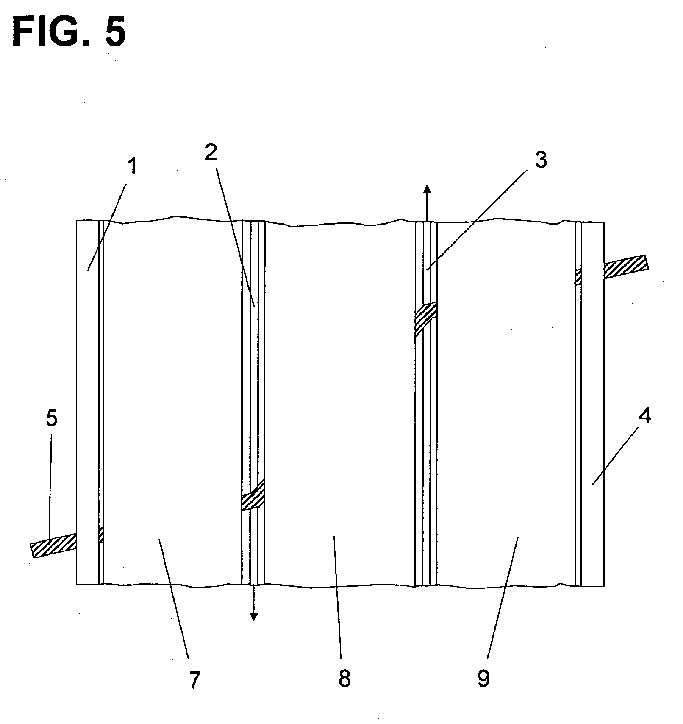

In einem weiteren - in Fig. 5 schematisch dargestellten - Schritt wird zwischen der Führungsschiene 1 und dem Führungskamm 2 sowie zwischen dem Führungskamm 2 und dem Führungskamm 3 sowie zwischen Führungskamm 3 und der Führungsschiene 4 jeweils eine dünne Kautschukplatte 7, 8, 9 über die gesamte Erstreckung der durch die hintereinander angeordneten Stahlkorde gebildeten Lage auf die Stahlkorde aufgelegt und angedrückt.

Die einzelnen hintereinander angeordneten und in ihrem Winkelverlauf eingestellten Stahlkorde 5 sind auf diese Weise durch die Kautschukplatten 7, 8 bzw. 9 miteinander gekoppelt.

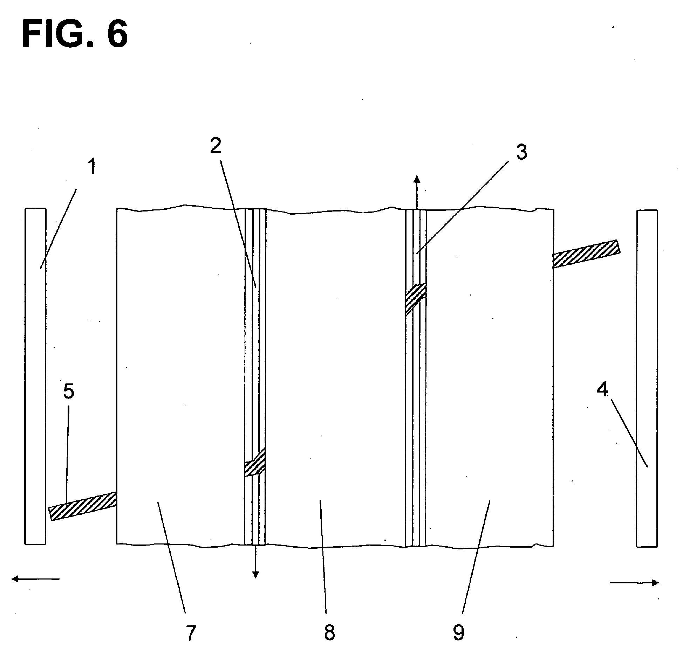

In einem weiteren - in Fig. 6 dargestellten - Schritt werden die Führungsschienen 1 und 4 senkrecht zu ihrer Längserstreckungsrichtung jeweils nach außen voneinander und von den Stahlkorden 5 entfernt. Danach wird die auf diese Weise gebildete Lage von parallelen in ihrem Winkelverlauf fein eingestellten und mit Kautschukplatten 7, 8, 9 gekoppelten Stahlkorden 5 von den Führungskämmen 2 und 3 abgehoben und der weiteren individuell gewünschten Bearbeitung oder Verarbeitung zugeführt.

Je nach Bedarf können diese Lagen von in Kautschuk eingebetteten Stahlkorden 5 direkt auf vorkonturierte Reifenrohlinge aufgebaut werden oder aber auf einer speziellen Gürtelaufbautrommel bekannter Art aufgebaut werden.

In einem anderen - nicht dargestellten Ausführungsbeispiel - werden diese Lagen von in Kautschuk eingebetteten Stahlkorden 5 noch vollständig mit einer dünnen Kautschukschicht überzogen und erst danach dem weiteren Gürtelaufbauprozess des Reifens zugeführt.

Die Abstände der Führungsschiene 1, des Führungskamms 2, des Führungskamms 3 und der Führungsschiene 4 von einander sind in einer nicht dargestellten Ausführung individuell zueinander gesteuert einstellbar ausgebildet. Je nach gewünschter Breite der Lage von in Kautschuk eingebetteten Stahlkorden 5 in Abhängigkeit von der gewünschten Gürtelbreite und dem gewünschtem Gürtellagenverlauf werden diese individuell zu einander eingestellt.

In einer weiteren nicht dargestellten Ausführung sind mehr als zwei parallele Führungskämme - beispielsweise drei oder vier Führungskämme ausgebildet. Dies ermöglicht eine weitere verfeinerte Einstellung des Verlaufs der Stahlkorde einer Gürtellage.

Die Länge der Führungsschienen 1 und 4 sowie der Führungskämme 2 und 3 ist entsprechend der erforderlichen Lagenlänge entsprechend der Anforderungen des herzustellenden Gürtels oder länger gewählt.

Der Abstand der Durchgangsöffnungen 11 bzw. 14 sowie der Zahnlücken 22 bzw. 23 jeweils zueinander ist entsprechend den erforderlichen Corddichten (EPDM) der Stahlkorde der Gürtellage abgestimmt.

Der Durchmesser der Durchgangsöffnungen 11 bzw. 14 sowie der Zahnlücken 22 bzw. 23 ist auf den Korddurchmesser der Stahlcorde abgestimmt.

In einer weiteren alternativen nicht dargestellten Ausbildung werden - anders als im Zusammenhang mit Fig. 4 erläutert - die Feineinstimmungen des Verlaufs der Stahlkorde nicht dadurch erzielt, dass die Führungskämme 2 und 3 in ihrer Längserstreckungsrichtung bewegt werden, sondern dadurch, dass sie senkrecht zur Längserstreckungsrichtung auf die Führungsschienen 4 bzw. 1 zu bzw. weg von diesen bewegt werden.

Die im Zusammenhang mit den Figuren 1 bis 6 dargestellte Vorrichtung mit Führungsschienen 1 und 4 sowie Führungskämmen 2 und 3 ist in einer besonderen Ausbildung Bestandteil einer Gürtelherstellungsmaschine bzw. einer Reifenaufbaumaschine.

Die Lage von in Kautschuk eingebetteten Stahlkorden 5 wird in einer Ausbildung auf diese Weise in der erforderlichen Länge zum Aufbau einer Gürtellage des Gürtels hergestellt und direkt auf einer Reifenaufbautrommel aufgelegt.

In einer anderen Ausbildung wird sie zunächst weiteren Prozessschritten zugeführt. So wird beispielsweise in einer nicht dargestellten Ausführung zunächst eine Gürtelkantengummierung vorgenommen.

In einer anderen nicht dargestellten Ausführung werden mehrere derartig hergestellte Lagenabschnitte in bekannter nicht dargestellter Weise zu einem großen Gürtellagenaufbauband zusammengespleißt und beispielsweise in einer Kassette aufgewickelt. Zur Herstellung des Gürtels wird die Kassette in den Bereich der Reifenbaumaschine gebracht. Dort wird das Band ausgewickelt und auf Länge der Gürtellage zugeschnitten.

In einer nicht dargestellten Ausführung wird der Stahlkord 5 in der Vorbereitung zunächst in einem bekannten Extrusionsprozess gummiert, auf eine Spule gewickelt und an der in den Figuren 1 bis 6 dargestellten Vorrichtung wieder ausgewickelt und - wie im Zusammenhang mit Fig. 1 erläutert - in die Führungsschienen und Führungskämme eingeführt und abgelängt.

In anderer nicht dargestellter Ausführung ist ein entsprechend ausgebildeter Extruder direkt der in den Figuren 1 bis 6 dargestellten Vorrichtung vorgelagert. Der Stahlcord wird direkt in bekannter Weise durch einen Extrusionsprozess gummiert und - wie im Zusammenhang mit den Figuren 1 bis 6 erläutert - in die Führungsschienen und Führungskämme eingeführt und abgelängt.

In einer besonderen nicht dargestellten Ausführung werden die Kautschukplatten 7, 8 und 9 nach Auflegen auf die Stahlcorde zusätzlich auf diesen angerollt.

Anstelle der Führungskämme 2 und 3 sind in einer weiteren nicht dargestellten Ausführung Magnetleisten vorgesehen, die nach Einführung der Stahlcorde durch die Durchgangsöffnungen 11 und 14 der Führungsschienen 1 und 4 die Stahlcorde 5 an den Führungskämmen magnetisch festhalten.

Zur Verarbeitung unterschiedlicher Korddurchmesser bzw. Korddichten werden die Führungsschiene 1 und 4 bzw. bei Verwenden von Führungskämmen 2 und 3 auch die Führungskämme 2 und 3 ausgetauscht.

In einer weiteren nicht dargestellten Ausführung wird - anders als in Fig. 1 erläutert - nicht der Stahlkord 5 zum Einführen in die Vorrichtung gegenüber der aus Führungsschienen 1 und 4 und Führungskämmen 2 und 3 gebildeten Vorrichtung verschoben, sondern die Vorrichtung mit den Führungsschienen 1 und 4 sowie den Führungskämmen 2 und 3 wird auf den Stahlkord 5 zu bewegt.

In einer weiteren alternativen Ausbildung sind die Durchgangsöffnungen 11 bzw. 14 der Führungsschienen 1 und 4 keine gebohrte Durchgangsöffnungen, sondern sind analog zu den Zahnlücken 22 bzw. 23 der Führungskämme 2 und 3 als Zahnlücken ausgebildet. Die Stahlcorde 5 werden dann auf den Führungsschienen 1 und 4 durch zusätzliche die Zahnlücken nach oben hin abdeckende Klemmleisten fixiert.

In alternativer Ausbildung werden - anders als im Zusammenhang mit der Erläuterung zu Fig. 4 dargestellt - nicht vollständige Kautschukplatten aufgelegt, sondern die Corde werden mit einer die Corde verbindenden Gummilösung bekannter Art bestrichen.

In weiterer alternativer Ausbildung werden zusätzlich zu den in Fig. 4 erläuterten Kautschukplatten 7, 8, 9 die Stahlcorde mit einer derartigen Gummilösung bestrichen.

In einer weiteren alternativen Ausbildung werden bereits gummierte Stahlcorde 5 im erläuterten Schritt von Fig. 1 eingesetzt. Die im Zusammenhang mit Fig. 4 erläuterte Kopplung erfolgt dadurch, dass die Stahlcorde erwärmt werden, so dass die Gummilösung aufweicht und sich die Gummilösung der benachbarten Stahlcorde miteinander verbindet.

In einer weiteren nicht dargestellten Ausführung erfolgt dies zusätzlich zum Aufbringen von den in Fig. 4 erläuterten Kautschukplatten 7, 8, 9.

### Bezugszeichenliste

### (Teil der Beschreibung)

- 1: Führungsschiene
- 2: Führungsschiene
- 3: Führungskamm
- 4: Führungskamm
- 5: Stahlkord
- 6: Schneideinrichtung
- 7: Kautschukplatte
- 8: Kautschukplatte
- 9: Kautschukplatte
- 11: Durchgangsöffnung
- 12: Zahn
- 13: Zahn
- 14: Durchgangsöffnung
- 22: Lücke
- 23: Lücke

## Patentansprüche

1. Verfahren zur Herstellung einer Gürtellage eines Fahrzeugreifens, bei dem mehrere fadenförmige oder bandförmige Festigkeitsträger (5) zunächst in einer Ebene einzeln parallel und beabstandet zu einander aufgelegt werden, bei dem die Festigkeitsträger (5) danach in ihrem Längenverlauf deformiert werden, bei dem die Festigkeitsträger (5) erst nach der Deformation miteinander verbunden werden und bei dem erst danach die so gebildete Lage aus mit einander verbundenen Festigkeitsträgern (5) der Aufbaueinrichtung zum Aufbau eines Reifengürtels zugeführt wird.

2. Verfahren zur Herstellung einer Gürtellage eines Fahrzeugreifens gemäß den Merkmalen von Anspruch 1,
bei dem die Festigkeitsträger (5) jeweils nach Auflage in der Ebene zunächst in der Ebene mittels Fixierelementen in ihrer Position fixiert und danach in ihrem Längenverlauf deformiert werden, bei dem die Festigkeitsträger (5) erst nach der Deformation miteinander verbunden werden, bei dem danach die Fixierung gelöst wird und bei dem danach die so gebildete Lage aus mit einander verbundenen Festigkeitsträgern (5) der Aufbaueinrichtung zum Aufbau eines Reifengürtels zugeführt wird.

3. Verfahren zur Herstellung einer Gürtellage eines Fahrzeugreifens gemäß den Merkmalen von Anspruch 2,
bei dem das Auflegen der band- oder fadenförmigen Festigkeitsträger (5) in der Ebene **dadurch** erfolgt, dass jeweils ein erster band- oder fadenförmiger Festigkeitsträger (5) längs seiner Erstreckungsrichtung in die Ebene eingeführt wird, bei dem dieser band- oder fadenfömige Festigkeitsträger (5) in der Ebene längs seiner Erstreckungsrichtung an zwei von einander beabstandeten Positionen fixiert und dann abgelängt wird, und dass danach ein weiterer in Querrichtung zur Längserstreckung des abgelängten Festigkeitsträgers (5) beabstandeter band- oder fadenförmiger Festigkeitsträger (5) längs seiner Erstreckungsrichtung in die Ebene eingeführt wird, der ebenfalls in der Ebene längs seiner Erstreckungsrichtung an zwei von einander beabstandeten Positionen fixiert und dann abgelängt wird.

4. Verfahren zur Herstellung einer Gürtellage eines Fahrzeugreifens gemäß den Merkmalen von Anspruch 2 oder 3,
bei dem die band- oder fadenförmigen Festigkeitsträger (5) in der Ebene auf wenigstens zwei, insbesondere wenigstens vier, quer zur Längserstreckung der Festigkeitsträger ausgerichtete Halteleisten aufgelegt und auf diesen fixiert werden.

5. Verfahren zur Herstellung einer Gürtellage eines Fahrzeugreifens gemäß den Merkmalen von Anspruch 3 oder 4,
bei dem die Fixierung über magnetische Haltekräfte erfolgt.

6. Verfahren zur Herstellung einer Gürtellage eines Fahrzeugreifens gemäß den Merkmalen von Anspruch 5,
bei dem die Fixierung über magnetische Halteleisten erfolgt.

7. Verfahren zur Herstellung einer Gürtellage eines Fahrzeugreifens gemäß den Merkmalen von Anspruch 3 oder 4,
bei dem die Fixierung über Formschluss erfolgt.

8. Verfahren zur Herstellung einer Gürtellage eines Fahrzeugreifens gemäß den Merkmalen von Anspruch 7,
bei dem die Fixierung über Führungsschienen (1,4) mit mehreren Durchgangsöffnungen (11,14) zur Aufnahme jeweils eines einzelnen Festigkeitsträgers (5) und/oder über kammartige Führungsschienen (2,3) mit mehreren Ausnehmungen (22,23) zur Aufnahme jeweils eines einzelnen Festigkeitsträgers (5) erfolgt.

9. Verfahren zur Herstellung einer Gürtellage eines Fahrzeugreifens gemäß den Merkmalen von einem oder mehreren der Ansprüche 2 bis 8,
bei dem die Deformation der einzelnen Festigkeitsträger (5) durch gesteuerte relative Positionsveränderung der auf den jeweiligen Festigkeitsträger (5) einwirkenden Fixierelemente zueinander erfolgt.

## Claims

1. Method for manufacturing a belt ply of a vehicle tyre, in which a number of reinforcing elements (5) in filament or strip form are first placed individually in such a way that they are parallel to and spaced apart from one another in one plane, in which the reinforcing elements (5) are then deformed along their length, in which the reinforcing elements (5) are joined together only after being deformed, and in which only then is the ply that is formed in this way, comprising interconnected reinforcing elements (5), passed on to the building device for building a tyre belt.

2. Method for manufacturing a belt ply of a vehicle tyre according to the features of Claim 1, in which, after placement in the plane, the reinforcing elements (5) are in each case first fixed in their position in the plane by means of fixing elements and then deformed along their length, in which only the reinforcing elements (5) are joined together only after being deformed, in which then the fixing is released and in which then the ply that is formed in this way, comprising interconnected reinforcing elements (5), is passed on to the building device for building a tyre belt.

3. Method for manufacturing a belt ply of a vehicle tyre according to the features of Claim 2, in which the placement of the reinforcing elements (5) in filament or strip form in the plane takes place by a first reinforcing element (5) in strip or filament form respectively being introduced into the plane along the direction of its extent, in which this reinforcing element (5) in strip or filament form is fixed in the plane along the direction of its extent at two positions spaced apart from one another and is then cut to length, and in that then a further reinforcing element (5) in strip or filament form, spaced apart in the transverse direction in relation to the longitudinal extent of the cut-to-length reinforcing element (5), is introduced into the plane along the direction of its extent and is likewise fixed in the plane along the direction of its extent at two positions spaced apart from one another and is then cut to length.

4. Method for manufacturing a belt ply of a vehicle tyre according to the features of Claim 2 or 3, in which the reinforcing elements (5) in strip or filament form are placed in the plane on at least two, in particular at least four, holding bars aligned transversely in relation to the longitudinal extent of the reinforcing elements and are fixed on said bars.

5. Method for manufacturing a belt ply of a vehicle tyre according to the features of Claim 3 and 4, in which the fixing takes place by means of magnetic holding forces.

6. Method for manufacturing a belt ply of a vehicle tyre according to the features of Claim 5, in which the fixing takes place by means of magnetic holding bars.

7. Method for manufacturing a belt ply of a vehicle tyre according to the features of Claim 3 and 4, in which the fixing takes place by means of positive locking.

8. Method for manufacturing a belt ply of a vehicle tyre according to the features of Claim 7, in which the fixing takes place by means of guiding rails (1, 4) with a number of through-openings (11, 14) for each receiving a single reinforcing element (5) and/or by means of comb-like guiding rails (2, 3) with a number of clearances (22, 23) for each receiving a single reinforcing element (5).

9. Method for manufacturing a belt ply of a vehicle tyre according to the features of one or more of Claims 2 to 8, in which the deformation of the individual reinforcing elements (5) takes place by controlled relative positional adjustment of the fixing elements acting on the respective reinforcing element (5).

## Revendications

1. Procédé de fabrication d'une couche de ceinture pour un bandage de roue de véhicule, dans lequel plusieurs renforts (5) en forme de fil ou de ruban sont d'abord posés séparément, parallèlement et à distance les uns des autres dans un plan, les renforts (5) étant ensuite déformés dans leur extension longitudinale, les renforts (5) n'étant reliés les uns aux autres qu'après leur déformation et avant que la couche ainsi formée de renforts (5) reliés les uns aux autres soit ensuite amenée au dispositif de montage pour être montée dans la ceinture d'un bandage de roue.

2. Procédé de fabrication d'une couche de ceinture sur pour bandage de roue de véhicule selon les caractéristiques de la revendication 1, dans lequel après avoir été posés dans le plan, les renforts (5) sont d'abord immobilisés en position dans le plan au moyen d'éléments de fixation et sont ensuite déformés dans leur extension longitudinale, les renforts (5) n'étant reliés les uns aux autres qu'après la déformation, la fixation étant ensuite libérée et la couche ainsi formée de renforts (5) reliés les uns aux autres étant ensuite amenée au dispositif de montage pour être montée dans la ceinture d'un bandage.

3. Procédé de fabrication d'une couche de ceinture pour un bandage de roue de véhicule selon les caractéristiques de la revendication 2, dans lequel les renforts (5) en forme de ruban ou de fil sont posés dans le plan en apportant dans le plan un premier renfort (5) en forme de ruban ou de fil dans le sens de son extension, ce renfort (5) en forme de ruban ou de fil étant fixé dans le plan en deux positions situées à distance l'une de l'autre dans le sens de son extension pour être ensuite découpé à longueur, et en insérant ensuite dans le plan un autre renfort (5) en forme de ruban ou de fil dans le sens de son extension et à distance dans la direction transversale par rapport à l'extension longitudinale du renfort (5) découpé à longueur, ce renfort étant également fixé dans le plan en deux positions situées à distance l'une de l'autre dans le sens de son extension pour être ensuite découpé à longueur.

4. Procédé de fabrication d'une couche de ceinture pour un bandage de roue de véhicule selon les caractéristiques des revendications 2 ou 3, dans lequel les renforts (5) en forme de ruban ou de fil sont placés dans le plan sur au moins deux et en particulier au moins quatre languettes de maintien orientées transversalement par rapport à l'extension longitudinale des renforts et sont fixés sur ces languettes.

5. Procédé de fabrication d'une couche de ceinture pour un bandage de roue de véhicule selon les caractéristiques des revendications 3 ou 4, dans lequel la fixation s'effectue par l'intermédiaire de forces magnétiques de maintien.

6. Procédé de fabrication d'une couche de ceinture pour un bandage de roue de véhicule selon les caractéristiques de la revendication 5, dans lequel la fixation s'effectue par l'intermédiaire de lattes de maintien magnétiques.

7. Procédé de fabrication d'une couche de ceinture pour bandage de roue de véhicule selon les caractéristiques des revendications 3 ou 4, dans lequel la fixation s'effectue par mise en correspondance géométrique.

8. Procédé de fabrication d'une couche de ceinture pour bandage de roue de véhicule selon les caractéristiques de la revendication 7, dans lequel la fixation s'effectue par l'intermédiaire de rails de guidage (1, 4) qui présentent plusieurs ouvertures de passage (11, 14) qui reprennent chacune un renfort (5) séparé et/ou par l'intermédiaire de rails de guidage (2, 3) en forme de peigne qui présentent plusieurs découpes (22, 23) qui reprennent chacune un renfort (5) distinct.

9. Procédé de fabrication d'une couche de ceinture pour un bandage de roue de véhicule selon les caractéristiques d'une ou plusieurs des revendications 2 à 8, dans lequel la déformation des différents renforts (5) s'effectue par modification contrôlée de la position relative des éléments de fixation qui agissent sur les différents renforts (5).
